# FASCICULE DE BREVET EUROPEEN

(11) **EP 0 663 792 B1**
(45) Date de publication et mention de la délivrance du brevet: **16.06.1999**
(21) Numéro de dépôt: 94923748.1
(22) Date de dépôt: 27.07.1994
(51) Int. Cl.: A01G 31/00

(54) **SUBSTRAT DE CULTURE HORS-SOL**
ERDLOSER KULTURSUBSTRAT
SOILLESS CULTIVATION SUBSTRATE

(30) Priorité: 10.08.1993 FR 9309821
(43) Date de publication de la demande: 26.07.1995
(73) Titulaire: ISOVER SAINT-GOBAIN, 92400 Courbevoie (FR)
(72) Inventeur: KAFKA, Bernard, F-60290 Rantigny (FR); VELDHUIZEN, Theunis, NL-6708 KH Wageningen (NL)
(74) Mandataire: Le Vaguerèse, Sylvain Jacques
(86) Numéro de dépôt international: FR9400945
(87) Numéro de publication internationale: WO9504453

(56) Documents cités:
- EP-A- 0 133 083
- EP-A- 0 310 501
- EP-A- 0 388 287
- WO-A-92/10602

## Description

L'invention est relative aux substrats à base de feutres minéraux utilisés pour la culture hors-sol.

De nombreuses publications ont décrit de tels substrats, notamment EP-B-201 426, EP-A-310 501, EP-A-388 287, EP-A-407 264. Dans ces publications, apparaissent un certain nombre de conditions auxquelles ces substrats doivent satisfaire pour permettre la conduite des cultures dans les conditions les plus adéquates.

Les préambule des revendications 1 et 12 sont connus du document EP-A-388 287.

Deux conditions en particulier ont retenu l'attention des techniciens de ce domaine. Il s'agit tout d'abord d'offrir aux plantes un milieu se prêtant à l'établissement de conditions hydriques les mieux adaptées aux cultures considérées. Il s'agit ensuite de faire en sorte que ce milieu conserve ses qualités au cours de son utilisation et, dans ce sens en particulier, qu'il conserve une bonne tenue mécanique lorsque, pour la culture, il est imbibé de solution nutritive.

Au-delà de ces conditions, d'autres nécessités sont permanentes pour ce type de produits, en particulier celle d'être d'un coût aussi faible que possible, ce qui conduit à privilégier des productions requérant un minimum d'opérations et, dans toute la mesure du possible, qui puissent être conduites de manière automatisée.

Dans les publications indiquées ci-dessus, une amélioration des substrats de culture hors-sol constitués de fibres minérales réside dans la structure même de ces substrats. Il s'agit, dans ces publications, d'utiliser des feutres dans lesquels les fibres sont orientées de manière sensiblement aléatoire. Pour cela, au cours de la fabrication du substrat, partant d'un feutre constitué immédiatement après la fabrication des fibres, et dans lequel les fibres sont préférentiellement orientées selon des strates, une réorientation plus 〈〈 aléatoire 〉〉est obtenue par une compression longitudinale du feutre. Le produit résultant, qui est dit 〈〈 crêpé 〉〉, présente des fibres sans direction préférentielle, sinon de façon locale, sur des parties représentant une faible fraction de l'épaisseur du substrat. Seules les fibres des faces du feutre directement en contact avec les dispositifs de fabrication ont encore une orientation dans des plans parallèles à ces faces. Mais, là encore, ceci ne concerne qu'une faible fraction de l'épaisseur du feutre.

Les produits faisant l'objet de ces publications permettent, simultanément, d'atteindre une bonne résistance à l'écrasement, notamment sous le poids de la solution dont ils sont imbibés, et une bonne rétention de ces solutions. En outre, en jouant notamment de la qualité des fibres qui les constituent, il est possible d'obtenir des produits dont les propriétés mécaniques sont parfaitement satisfaisantes tout en permettant un allégement substantiel.

Dans les développements récents concernant les substrats de culture, il est apparu que pour favoriser une bonne colonisation des substrats par les racines, il était avantageux de maintenir une bonne rétention de solution à tous les niveaux dans l'épaisseur du substrat. La tendance naturelle sous l'effet de la pression hydrostatique pour un produit 〈〈 homogène 〉〉 est de présenter un maximum de solution en partie basse, alors que la partie supérieure peut être relativement sèche. Pour compenser cet effet, il a été proposé dans le brevet EP-B-310 501 de constituer un substrat présentant une rétentivité variable dans sa hauteur, les parties hautes du produit présentant la rétentivité la plus élevée. Pour moduler la rétentivité des solutions, comme il vient d'être indiqué, il est proposé dans cette publication de faire varier, en fonction du niveau dans le substrat, par exemple le diamètre des fibres ou la masse volumique ou encore les deux simultanément. Des exemples de réalisation proposés comprennent des substrats formés d'une pluralité de couches superposées, les couches supérieures présentant la plus forte rétentivité, celle-ci allant en décroissant dans les différentes couches de la couche supérieure à la couche inférieure.

S'il est nécessaire de maintenir en permanence une quantité suffisante de solution disponible pour les plantes, de telle sorte que celles-ci soient à tout moment dans les meilleures conditions pour assurer leur croissance, cette dernière n'est pas uniquement liée à l'abondance de la solution. On sait, notamment, l'importance de l'équilibre air/eau dans le milieu de culture pour garantir la croissance la plus rapide. Dans les publications indiquées précédemment, les caractéristiques des produits étaient orientées vers la meilleure rétention de la solution. Ce souci est d'autant plus significatif que les cultures sont conduites dans des conditions moins rigoureusement contrôlées et/ou, lorsqu'en fonction de la nature de la culture ou de l'époque à laquelle celle-ci est conduite, les besoins en eau sont plus importants. Indépendamment, l'évolution des installations vers un contrôle plus systématique des conditions de culture et notamment de l'irrigation des substrats permet, en toutes circonstances, de favoriser l'obtention d'un bon rapport air/eau, la constitution d'une réserve de solution aussi importante que possible ne présentant plus le caractère prioritaire qu'on avait pu lui assigner précédemment.

Des propositions ont été faites dans le but d'améliorer l'apport d'air au sein de certains substrats. En pratique, ces propositions visent à créer des espaces dans lesquels l'air pénètre jusqu'au coeur du substrat. Dans ce sens, il a été proposé de former des canaux ou orifices dans le corps du substrat. Ce mode d'aération du substrat n'est pas nécessairement le plus satisfaisant. Le façonnage du matériau est une opération qui n'est pas toujours commode. Le forage de canaux, par exemple, est difficile lorsque le matériau fibreux est de faible masse volumique, notamment inférieure à 50 kg/m³. Dans ce cas, les fraises avec lesquelles sont creusés ces canaux ont tendance à arracher les fibres par mèches entières conduisant à 〈〈 déchirer 〉〉 le produit de façon très irrégulière. Par ailleurs, les produits ainsi obtenus présentent, dans l'ensemble, une moindre résistance mécanique.

Les inventeurs se sont fixé pour but d'obtenir un substrat de culture hors-sol qui offre une gamme accrue de propriétés. En particulier, les inventeurs ont eu pour objectif de fournir un substrat résistant à l'affaissement sous la pression hydrostatique, offrant globalement une bonne rétention de la solution nutritive et, par ailleurs, maintenant, globalement également, un bon rapport air/eau.

Les substrats selon l'invention sont constitués de feutres de fibres minérales dont les strates, à l'origine parallèles aux faces - lors de la constitution du feutre à partir de fibres récupérées sur un organe de réception - sont, au moins partiellement, plissées dans l'épaisseur du feutre. Dans cette configuration, contrairement au cas des produits crêpés dont il a été question précédemment, les fibres ne présentent pas de distribution macroscopiquement isotrope et la structure en strates est clairement apparente sur une section du produit, même si ces strates sont fortement déformées en plis ou larges boucles.

Dans les substrats selon l'invention, la structure plissée est maintenue dans la situation qui, globalement, est celle résultant des conditions de réception ; les faces supérieure et inférieure du substrat sont également les faces supérieure et inférieure du feutre au moment de sa formation.

Toujours selon l'invention, il est possible de retourner de 90 degrés les feutres de telle manière que le produit plissé repose sur chant. Le dessin des plis est alors observé dans le substrat sur ses faces supérieure et inférieure. Cette dernière mise en oeuvre est particulièrement préférée quand il est nécessaire d'utiliser des feutres extrêmement 〈〈 légers 〉〉, c'est-à-dire des feutres dans lesquels la masse volumique est très faible et notamment inférieure à 20 kg/m³ et moins pour des feutres de laine de verre et, par exemple, de moins de 40 kg/m³ pour ceux formés de laine de roche.

En d'autres termes, dans les deux cas considérés dans le substrat, le feutre est disposé de manière que la direction de compression longitudinale, qui détermine la formation des plis comme il sera vu plus loin, reste parallèle au plan horizontal (ou pratiquement horizontal) correspondant au sol ou au support sur lequel repose le substrat pendant son utilisation.

Les substrats selon l'invention ainsi que leurs propriétés et un mode de production sont détaillés dans la suite de la description faisant référence aux planches de dessins dans lesquelles :
- les figures 1a, 1b, 1c et 1d représentent, respectivement, deux formes de structures de substrats antérieures et deux structures selon l'invention,
- les figures 2a et 2b présentent, à plus grande échelle, des structures selon l'invention correspondant aux figures 1c et 1d,
- la figure 2c présente un substrat selon la publication antérieure EP-B-310 501, comprenant deux couches différentes superposées,
- la figure 2d présente un substrat selon l'invention formé à partir d'un feutre comprenant deux couches différentes,
- la figure 3 est une vue schématique d'une installation de production utilisable pour la fabrication de substrats selon l'invention,
- la figure 4 est un schéma montrant le mode de découpe du feutre d'origine pour constituer des substrats selon l'invention de type 1c et 1d.

Le substrat représenté en 1a est formé d'un feutre à fibres et strates orientées parallèlement aux faces supérieures et inférieures. Chronologiquement, ce sont les produits présentant cette structure qui, les premiers, ont été utilisés pour la culture sur un substrat minéral fibreux. L'orientation en strates des fibres aurait pu rendre ces produits peu résistants à la déformation dans l'épaisseur. En fait, ceci était compensé par une masse volumique relativement élevée (de l'ordre de 70 à 80 kg/m³ et plus) masquant ce relatif manque de résistance.

Le schéma 1b présente la structure d'un substrat 〈〈 crêpé 〉〉 selon le modèle préconisé dans les publications EP-A-388 287 et 407 264. Dans cette structure, en dehors des faces inférieure et supérieure dans lesquelles les fibres sont nécessairement dans les plans de ces faces, les fibres à l'échelle du substrat sont orientées dans toutes les directions. La texture de ces feutres permet de réduire sensiblement leur masse volumique, sans pour autant réduire leur résistance à I'affaissement. Des valeurs traditionnelles de masse volumique pour les substrats crêpés se situent entre 20 et 70 kg/m³. Par ailleurs, la croissance des racines dans ce milieu désordonné semble se faire de manière plus homogène. Les substrats sont mieux colonisés.

Les qualités hydriques des substrats 1a et 1b sont comparables pour une même qualité de fibres, sous la réserve indiquée que l'on opère à masse volumique relativement élevée. A plus faible masse, les produits du type 1a perdent leur réserve hydrique du fait d'une moindre résistance à l'affaissement.

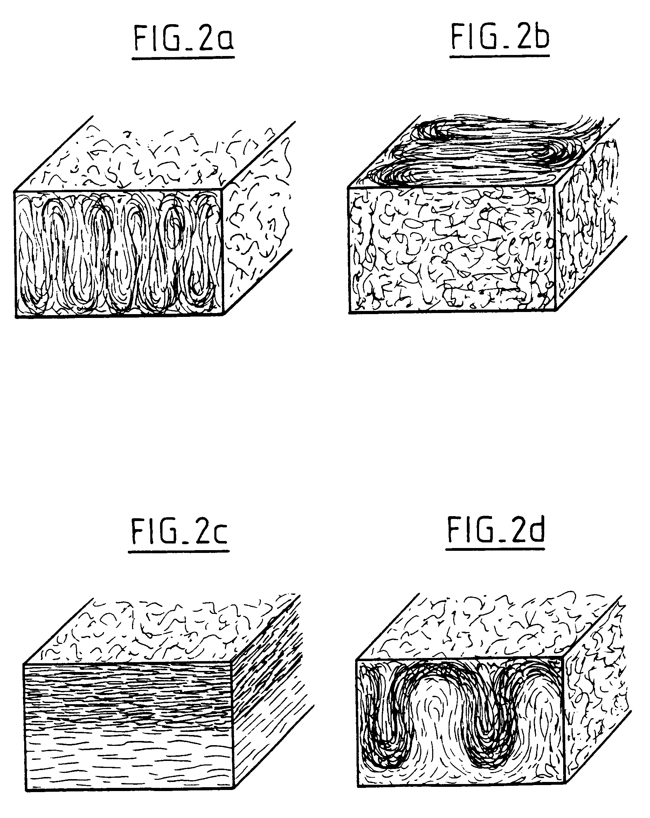

Rompant avec l'idée de constituer un produit ayant un ratio air/eau identique en tout point de son volume, les inventeurs ont conçu un substrat offrant aux plantes un milieu sans discontinuité mais comprenant, suivant une succession relativement régulière, des zones présentant des propriétés mécaniques et hydriques distinctes. Contrairement aux substrats dont la structure est du type représenté à la figure 2c et dans lesquels des couches différentes sont superposées régulièrement dans le sens de l'épaisseur, les substrats selon l'invention montrent des propriétés différenciées qui ne correspondent pas à des niveaux dans l'épaisseur du substrat.

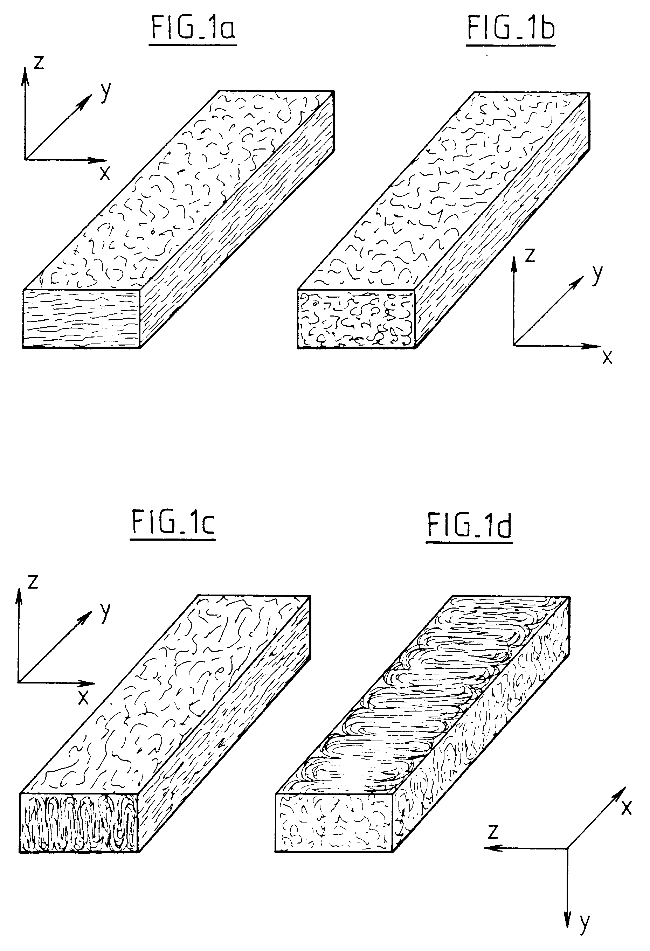

Les figures 1c, 1d, 2a et 2b illustrent la structure des produits considérés. Ils présentent une direction préférentielle des strates dans le sens de l'épaisseur (z) du feutre. Cette direction est particulièrement accusée dans la zone située à mi-hauteur du feutre. Elle disparaît pratiquement le long des faces inférieure et supérieure.

Cette structure résulte d'au moins une opération de compression effectuée dans le sens longitudinal du feutre selon la technique qui, dans son principe, est décrite notamment dans EP-B-133 083.

Succinctement, la formation est la suivante.

A partir de dispositifs (1) de production de fibres (2) véhiculées par des courants gazeux, les fibres sont recueillies à la base d'une chambre (3) sur un convoyeur de réception (4) qui sépare les fibres et les gaz aspirés dans des caissons (5) maintenus en dépression. Les fibres, entre leur formation et la réception, sont enduites d'un produit liant. Le feutre constitué (6) dans lequel les fibres, comme indiqué précédemment, sont disposées dans des plans ou strates sensiblement parallèles aux faces, est ensuite transporté dans l'ensemble de compression longitudinale.

Dans la forme présentée, le dispositif en question est constitué de trois paires de convoyeurs (7/8, 9/10, 11/12). La vitesse de la seconde paire de convoyeurs 9/10 est inférieure à celle de la paire 7/8 pour contraindre le feutre à se replier sur lui-même.

Bien que le schéma présente trois paires de convoyeurs et donc la possibilité d'effectuer successivement deux compressions longitudinales, il est aussi possible d'effectuer le plissement du feutre en une seule compression dans les conditions qui seront détaillées ci-après.

Pour les produits dits crêpés, et pour obtenir leur structure particulière, les opérations de crêpage sont effectuées avec quelques précautions. En particulier interviennent, le choix du taux de compression et les caractéristiques du feutre (6), notamment sa masse volumique, son épaisseur, de même que les caractéristiques des fibres (longueur, diamètre moyen). Tous ces éléments contribuent, de façon plus ou moins significative, au bon résultat du crêpage qui, comme nous l'avons indiqué, consiste en une réorientation désordonnée des fibres. Le cas échéant, et surtout si le taux de compression est élevé, le bon résultat du crêpage peut provenir d'une succession de crêpages parties. Ceci peut se faire sur l'installation schématisée, par la succession des compressions correspondant au passage d'une paire de convoyeurs à la suivante.

Pour obtenir les produits 〈〈 plissés 〉〉 selon l'invention, il convient de maintenir un taux relativement élevé de compression. On comprend en effet que, pour amener une fraction substantielle des couches de fibres dans des directions correspondant à l'épaisseur du feutre ou, plus précisément, à former des plis dont la direction principale est l'épaisseur du feutre, il soit nécessaire en quelque sorte de réduire sa longueur d'origine de façon importante. Avantageusement, le taux de compression est égal ou supérieur à 2,5 et, de préférence, compris entre 4 et 10. Les taux de compression les plus élevés sont normalement utilisés avec les feutres qui, à l'origine, présentent la masse par unité de surface la plus faible.

Pour obtenir le plissé des strates à l'intérieur du feutre, il est préférable d'opérer avec des fibres suffisamment longues qui, par leur enchevêtrement initial sous forme de mèches, se désolidarisent moins facilement les unes des autres pour prendre une disposition plus désordonnée. Il est difficile de fixer précisément les meilleures conditions de longueur des fibres dans la mesure ou les méthodes de mesure sont de nature à systématiquement briser celles-ci. Par ces méthodes, on détermine essentiellement des dimensions relatives. On sait, par exemple, que les fibres produites par des techniques dites de centrifugation interne (le matériau fondu passe à l'intérieur d'un centrifugeur formant filière) sont, habituellement, plus longues que celles obtenues par centrifugation externe (le matériau fondu est déversé sur une série de rotors qui l'accélèrent et le font se détacher sous forme de gouttelettes qui s'étirent).

En dépit des imprécisions sur ces mesures, on observe que les fibres qui conviennent le mieux pour l'utilisation concernée sont relativement longues.

Le diamètre moyen des fibres utilisées influe, comme il est connu, sur les propriétés des feutres. On sait notamment que, pour une même masse volumique, un substrat formé de fibres de plus petit diamètre offre une meilleure rétentivité. L'avantage le plus sensible de l'utilisation de fibres à faible diamètre (moins de 5 micromètres de diamètre moyen et, de préférence, de 2 à 4 micromètres) réside dans la possibilité de constituer des feutres de très faible masse volumique présentant néanmoins de bonnes propriétés hydriques.

Dans la confection des substrats selon l'invention, l'utilisation de fibres de petits diamètres et, par suite, de feutres à l'origine de très faible masse volumique, facilite également la compression à des taux élevés (de 4 à 10 et plus) conduisant à des produits dont la structure en plis est particulièrement bien marquée.

En pratique, les fibres des feutres utilisés pour constituer les substrats selon l'invention présentent un diamètre compris entre 1 et 11 micromètres et, le plus souvent, entre 2 et 9 micromètres.

Les substrats selon l'invention ont été qualifiés de 〈〈 plissés 〉〉. Il s'agit là d'une dénomination commode, mais qui ne correspond pas exactement à leur structure. Il s'agit, par ce terme, de rendre ce qui correspond à une tendance importante de cette structure, mais qui n'en donne pas une image complète. En particulier, dans les produits selon l'invention, les faces inférieure et supérieure qui sont en contact avec les dispositifs convoyeurs (ou analogues, notamment cylindres) utilisés pour effectuer la compression longitudinale, se présentent de façon sensiblement uniforme. En d'autres termes, ces faces sont pratiquement exemptes de crevasses qui, si le produit était effectivement 〈〈 pliss 〉〉, ne manqueraient pas d'apparaître sur ces faces. Cette absence de crevasses met en évidence le mécanisme complexe qui régit le réarrangement des strates dans la transformation conduisant aux substrats selon l'invention.

Si on ne constate pas dans la partie voisine de ces faces une orientation préférentielle des strates dans le sens de l'épaisseur, cela tient vraisemblablement au fait que ces parties au contact des convoyeurs sont vigoureusement maintenues par ces convoyeurs qui imposent leur propre orientation. Au contraire, les parties situées au coeur du feutre ne sont maintenues que par les contacts qu'elles ont avec les strates voisines, elles-mêmes conduites de façon moins ferme. On comprend, dans ces conditions, que le réarrangement des strates soit d'autant plus important que la partie concernée est plus éloignée d'une des faces du feutre.

Quoiqu'il en soit on constate que si, à coeur, le feutre est bien 〈〈 plissé 〉〉 avec des fibres se trouvant dans des plans largement orientés dans le sens de l'épaisseur, à proximité des faces, au contraire, les strates n'ont plus cette orientation et ont même tendance à se disposer dans des plans parallèles aux faces des convoyeurs.

Nous avons indiqué l'absence de marques de plis ou crevasses sur les faces du substrat si l'opération de compression longitudinale a été bien conduite, c'est-à-dire si les taux de compression ont bien été adaptés aux masses volumiques, épaisseur du feutre, qualité des fibres, etc... Il est préférable d'éviter une structure comportant des crevasses en surface. Ce type de structure correspondrait, en effet, à une certaine fragilité. Même après que le produit ait été traité par passage dans l'étuve (13) afin de réticuler le liant, la cohésion entre les plis résultant de leur 〈〈 collage 〉〉 les uns aux autres serait insuffisante dans les conditions traditionnelles d'encollage. Au contraire, la présence sur les faces du produit de couches dont les directions sont celles de ces faces permet de maintenir une bonne résistance du produit aux contraintes (notamment en flexion) qu'il peut subir au cours de sa manutention. Ces couches forment, en quelque sorte, une armature ou une enveloppe qui garantit la stabilité du produit.

En pratique, la tendance à la formation de ces 〈〈 plis internes 〉〉 peut être estimée en observant une section longitudinale dans l'épaisseur du feutre. On constate avantageusement selon l'invention que la fraction de cette section correspondant à des fibres sensiblement perpendiculaires aux faces du feutre représente au moins 50 % de l'ensemble. Cette proportion peut même atteindre 70 % ou plus.

Comme précédemment indiqué, les substrats selon l'invention peuvent être constitués à partir des feutres plissés, comme il vient d'être dit, selon deux dispositions. Dans la première disposition représentée en 1c et 2a, l'épaisseur du feutre (3) correspond à celle du substrat. Dans la seconde disposition, l'épaisseur du feutre correspond aux faces supérieure et inférieure du substrat.

Les substrats selon l'invention peuvent, avantageusement, être de masse volumique relativement faible. Leur structure leur confère, à masse volumique égale, une bonne résistance à la compression dans l'épaisseur ou, ce qui est plus en rapport avec leur utilisation, une bonne résistance à la pression hydrostatique. Par ailleurs, comme nous l'avons indiqué, l'obtention de la structure selon l'invention est facilitée si l'on part de feutres (6) - avant compression longitudinale - de faible masse surfacique. Ceci permet, même avec des taux de compression relativement élevés, de produire des feutres et, par suite, des substrats à faible masse volumique.

Avantageusement, les produits selon l'invention présentent une masse volumique apparente de moins de 70 kg/m³ et, de préférence, inférieure à 50 kg/m³. Si la masse volumique des substrats peut descendre à des valeurs extrêmement faibles, par exemple de l'ordre de 10 kg/m³, les produits les plus adéquats se situeront, de préférence, entre 15 et 40 kg/m³. Les limites inférieures dans ce domaine sont d'ordre pratique. Plus la masse volumique est faible, plus il est difficile de maintenir la résistance à la compression, d'autant que ces masses volumiques correspondent à des fibres de très faible diamètre et qui offrent une résistance limitée. L'accroissement de la proportion de liant peut, dans une certaine mesure, compenser ce manque de résistance intrinsèque des fibres, mais il est difficile d'accroître beaucoup cette proportion sans engendrer d'autres difficultés.

Par ailleurs pour les masses volumiques les plus faibles, il est préférable de choisir la disposition représentée à la figure 2b qui, comme indiqué précédemment, offre la meilleure résistance à l'écrasement dans l'épaisseur du substrat.

L'utilisation en culture d'un substrat disposé comme en 2b offre la particularité d'un drainage des solutions nutritives plus rapide que dans le cas des substrats disposés selon 2a. La progression de la solution à travers les strates d'origine, ou couches, du feutre est moins rapide que dans une direction parallèle à ces strates, que celles-ci soient planes - lorsque l'on observe un substrat non 〈〈 plissé 〉〉 - ou qu'elles soient plissées comme selon l'invention.

Selon le type de culture envisagé un drainage plus rapide et, éventuellement, un taux de rétention plus faible à l'équilibre, peut être préféré pour autant que les apports en solution soient effectués avec une bonne régularité. Dans ce cas, le substrat mieux drainé offre des ratios air/eau plus élevés en moyenne que des produits qui, à l'équilibre, ont une rétention hydrique plus élevée.

Si, dans la pratique, la masse volumique apparente est encore, au moins pour une partie, celle que l'on trouve dans d'autres substrats, notamment les substrats crêpés, cette masse volumique masque des différences sensibles localement à l'intérieur du produit. Ceci constitue également une particularité importante des produits selon l'invention qui s'ajoute à celle concernant l'orientation des fibres.

Le réarrangement substantiel qui s'opère dans le produit au moment de la ou des compressions longitudinales et qui entraîne la formation de ce que nous désignons sous le nom de 〈〈 plis 〉〉, n'est que partiellement dirigé par le contact qui est maintenu sur les faces externes. Autrement dit le plissement, qui résulte de facteurs non complètement maîtrisés, favorise également l'apparition d'inhomogénéités de masse volumique aléatoirement distribuées au coeur du substrat. En termes imagés, les fibres sont localement plus ou moins tassées au gré des irrégularités de mouvement conduisant au plissement interne.

Ces irrégularités de masse volumique locales sont de dimensions limitées, mais peuvent atteindre une fraction significative de l'épaisseur du produit. Ordinairement, les fluctuations de masse volumique restent de l'ordre du dixième de l'épaisseur du produit mais peuvent, par endroits, atteindre le cinquième ou même le quart de l'épaisseur du produit. Ceci est à comparer avec ce qui correspondait aux produits antérieurs crêpés dans lesquels on s'efforçait de maintenir une homogénéité aussi poussée que possible.

Les variations de masse volumique locales apparaissent au creux des plis où les fibres sont relativement plus tassées. Elles peuvent aussi se manifester entre les strates formées perpendiculairement aux faces des feutres et présenter, dans ce cas, des formes allongées. De plus, systématiquement, les faces elles-mêmes présentent une masse volumique locale légèrement plus élevée que la moyenne. Les écarts de masse volumique apparaissent sur les feutres utilisés, que l'on considère des fractions situées dans différents points de l'épaisseur du feutre, ou à un même niveau mais à différents points dans la longueur due feutre correspondant au sens de progression sur la ligne de production.

Les écarts constatés à l'expérience sur des fractions de substrat dont les dimensions sont arbitrairement choisies au moins égales au dixième de l'épaisseur, peuvent atteindre 50 % de la masse moyenne et sont, le plus souvent, de l'ordre de 20 à 40 % de cette masse.

Il est remarquable de constater que ces variations, loin de nuire à la culture, peuvent favoriser celle-ci. Comme il a été indiqué précédemment, cette amélioration est attribuée au fait que l'hétérogénéité relative du produit permet d'offrir aux plantes une alternance de zones présentant des rapports air/eau variés. De cette façon, les racines trouvent dans le substrat les conditions les meilleures pour leur croissance. A côté de zones plus riches en air subsistent des réserves importantes d'eau qui sont distribuées dans tout le produit.

Les variations locales de masse volumique qui tiennent à la structure se trouvent bien évidemment dans les substrats, que ceux-ci soient dans la disposition 2a ou la disposition 2b.

Par ailleurs, les différences locales de propriétés qui viennent d'être décrites peuvent être accentuées de façon très sensible en partant d'un feutre qui est constitué, à l'origine, de strates différentes. La figure 2c est un exemple de feutre de ce type constitué de deux couches superposées dans l'épaisseur du produit sur la ligne de production. Il s'agira, par exemple, d'un feutre du type décrit dans la publication EP-A-310 501. Il peut s'agir, notamment, de deux couches distinctes par leur masse volumique apparente. Il peut s'agir aussi de deux couches distinctes par la dimension (diamètre) des fibres qui les composent. Ces deux types de différences conduisent, comme précisé dans cette publication, à des comportements mécaniques et hydriques distincts.

La préparation d'un substrat selon l'invention à partir d'un feutre du type présenté à la figure 2c conduit à une structure telle que schématisée à la figure 2d. Sur cette figure, on a souligné d'un trait mixte ce qui correspond approximativement à la limite entre les deux couches d'origine.

Ce schéma permet de faire ressortir qu'au delà des variations locales à l'intérieur de chaque couche, comme précédemment décrit, la présence de deux couches distinctes favorise encore davantage la constitution de zones de caractéristiques également distinctes à l'intérieur du substrat. On comprend que le plissement favorise l'apparition de plis (verticaux dans le feutre) correspondant alternativement à chacune des couches d'origine. Dans ces conditions, on peut obtenir une diversité des caractéristiques hydriques et/ou mécaniques, encore une fois sans rompre la continuité du substrat, cette diversité étant d'autant plus marquée que les couches initiales sont, elles-mêmes, plus différentes.

A ce propos, aux figures 2c et 2d, on a représenté des couches initialement d'épaisseur sensiblement égale. Il peut en être bien différemment si l'on veut limiter l'effet introduit par l'une de ces couches, dans ce cas son épaisseur et sa position initiale (dessus ou dessous) seront déterminées en fonction du résultat souhaité.

De façon préférée, dans les substrats constitués à partir d'un feutre comprenant deux couches distinctes, chacune des couches présente, avant compression, une masse de fibres par unité de surface sensiblement égale.

Comme précédemment, le feutre représenté figure 2d peut servir à constituer un substrat selon les deux dispositions prévues. Dans les deux cas le substrat offre, alternativement dans des zones 〈〈 verticales 〉〉, des parties à rétention hydrique alternativement plus élevée et plus faible. Ces variations s'ajoutent à celles résultant des variations locales de masse volumique, dont il a été question plus haut, pour aboutir à un produit dont les propriétés hydriques sont donc relativement variables.

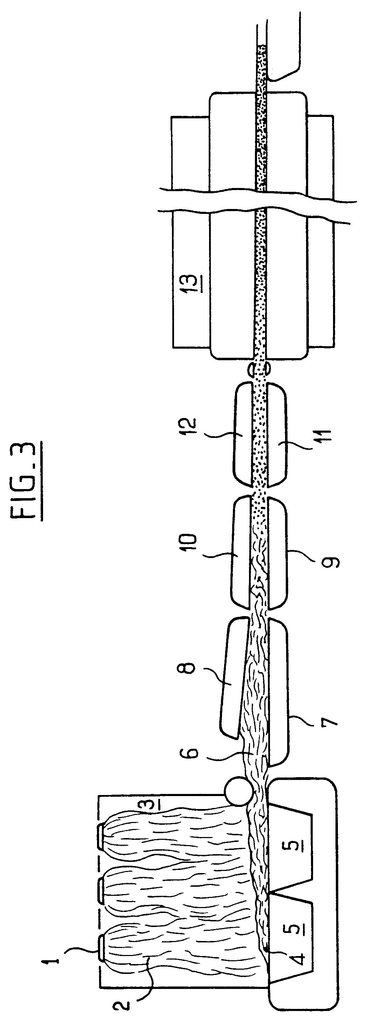

La combinaison présentée aux figures 2c et 2d concernant un ensemble formé de deux couches peut être généralisée à un ensemble comprenant plus de deux couches. Dans tous les cas, l'obtention du feutre d'origine multicouches peut être obtenu, par exemple, sur une installation comprenant une succession d'appareils de production de fibres comme décrit dans EP-B-310 501. Le schéma de la figure 3 présente ainsi une succession de trois dispositifs (1) alignés qui déposent trois couches de fibres pour constituer un seul feutre. Si les conditions de fonctionnement sont réglées en conséquence, une telle installation peut donc conduire à un produit à trois couches distinctes.

Des produits selon l'invention ont été préparés à partir de feutres de fibres de verre de différentes qualités. Sur ces produits, ont été mesurés la masse volumique apparente, l'affaissement après immersion et drainage, les propriétés hydriques des produits, en particulier le pF 1 (mesure faite dans les conditions décrites notamment dans EP-A-201 426 et qui permet d'apprécier la quantité d'eau disponible pour les plantes retenue par le substrat) et la quantité d'air après drainage.

Tous les produits testés sont plissés selon la technique de l'invention. La compression longitudinale est conduite aux taux indiqués en une seule étape de compression. Les dimensions moyennes des fibres sont données en micronaire et en diamètre moyen correspondant.

Les indications relatives à ces produits sont regroupées dans le tableau suivant :

| Produit | I | II | III | IV |
|---|---|---|---|---|
| Taux de crêpage | 5,5 | 5,5 | 5,5 | 5,5 |
| Micronaire (diamètre µ) sous 5 g | 3,9 (5,5) | 3,9 (5,5) | 6,6 (8) | - |
| Masse volumique apparente (kg/m³) | 29,7 | 35,4 | 34,3 | 35,7 |
| Affaissement drainage (%) | 4,1 | 2,7 | 0,9 | 2,3 |
| Eau à pF 1 (%) | 51,9 | 57,7 | 10,5 | 32,1 |
| Air après drainage (%) | 9,1 | 6,3 | 28,2 | 16 |

Le produit IV est constitué à partir d'un feutre comprenant deux couches d'égales épaisseurs correspondant aux produits II et III, la couche II étant disposée sur la couche III.

Ces produits présentent tous une fraction importante des fibres sensiblement des plans orientés perpendiculairement à la compression longitudinale. De façon qualitative, cette proportion déterminée en surface de section occupée par ces fibres est supérieure à 50 %.

Les substrats préparés comme il a été indiqué présentent tous une épaisseur de 7,5 cm. On constate des différences locales de masse volumique sur des morceaux découpés de 2 x 2 cm qui peuvent atteindre 50 % en plus ou en moins par rapport à la valeur moyenne apparente.

La disposition des pains est celle des figures 1c et 2a pour les exemples I, II, III et celle de la figure 2d pour l'exemple IV.

Les produits ont été essayés sur des cultures de tomates dans trois centres d'essais distincts pendant cinq mois dans des conditions traditionnelles de culture sur des pains de 120 cm de long et 15 cm de large, les plants ayant préalablement été développés dans les mêmes conditions sur des 〈〈 cubes 〉〉 traditionnels.

Les résultats de ces cultures, exprimés par les rapports des poids de tomates recueillies par m² de substrat, le produit I servant de témoin, sont les suivants :
- I : 100 %
- III : 97 %
- IV : 104 %

Les produits selon l'invention montrent, par rapport à des produits crêpés, d'excellentes aptitudes. Les productions, dans les mêmes conditions, sont un peu plus abondantes. De la même manière, on constate avec le produit IV une progression du rendement de l'ordre de 4 % par rapport aux produits analogues constitués d'une seule couche. Ce résultat, à lui seul, permet de montrer que la constitution non homogène des produits peut être un facteur favorable à la culture. Toujours à propos de cet exemple IV, il est remarquable de constater que ce produit s'avère plus performant que le produit III constitué de fibres relativement grosses et qui, pour cette raison, offre une moins bonne rétention d'eau, mais aussi plus performant que le produit I qui, a l'inverse, offre une très bonne réserve d'eau.

Les différences sur cette dernière comparaison montrent l'avantage qu'il peut y avoir avantage à ménager localement des zones à rapport air/eau plus élevé. Toujours en comparant les produits I et IV, il apparaît en effet en I une teneur en air après drainage de 9,1 %, alors qu'elle est globalement de 16 % pour le produit IV. Etant donné le manque volontaire d'homogénéité du produit, il faut même voir que les différences entre zones très riches en eau et zones plus 〈〈 aérées 〉〉 sont plus marquées que ces chiffres, encore une fois établis de façon globale, ne le font voir. Autrement dit, l'alternance des zones présentant des rapports air/eau très différents peut conduire à des produits particulièrement satisfaisants pour certaines cultures.

Le mode de découpe des pains est aussi un élément qui influe sur les propriétés des produits selon l'invention.

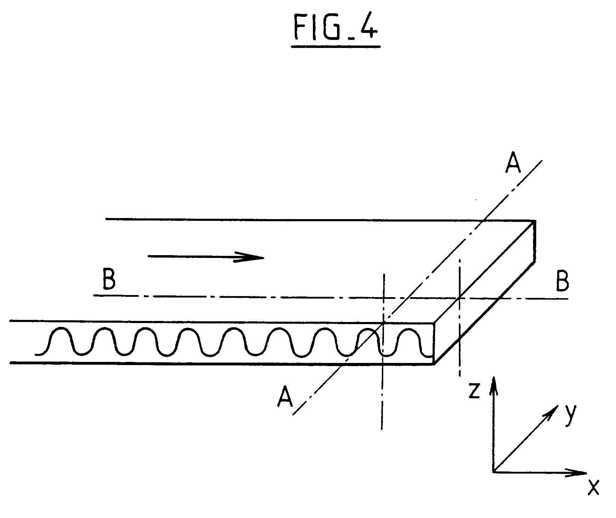

En pratique, pour les modes représentés en 1c et 2a, la découpe est faite de telle sorte que la longueur du pain corresponde à la largeur de la bande de feutre. Sur la figure 4, la direction de progression du feutre 〈〈 plissé 〉〉 [schématiquement représenté par la ligne ondulée dans l'épaisseur) est indiquée par une flèche. La découpe pour aboutir à un pain du type 1c est effectuée suivant la direction A-A.

L'obtention des pains de type 1d résulte d'une découpe longitudinale, par exemple de direction B-B, suivie d'une rotation de 90° pour amener le pain sur 〈〈 chant 〉〉.

Les pains de type 1c, c'est-à-dire ceux dont la hauteur (z) correspond à l'épaisseur du feutre (z) initial sont, de préférence, découpés de manière à aboutir au modèle représenté. Autrement dit, chaque pli s'étend sur toute la longueur du pain. Cette disposition est préférable à la disposition qui verrait les plis dans la largeur. Au plan mécanique, la disposition longitudinale des plis confère une meilleure rigidité au pain ce qui facilite sa manutention. Cette disposition est aussi préférable pour favoriser la colonisation du pain par les racines. Les strates initiales, même plissées, constituent des freins au passage des racines. Pour cette raison, dans la forme 1d, les racines ont tendance à s'étendre dans le sens de la longueur du pain. A l'inverse, si les plis s'étendaient dans la largeur du pain, elles seraient conduites préférentiellement le long des faces et ne trouveraient pas les conditions adéquates à leur développement.

Les considérations faites ci-dessus n'ont pas d'équivalent pour le modèle 1d. Ici, comme indiqué précédemment, la caractéristique dominante est l'aptitude au drainage pour les plantes qui nécessitent un rapport air/eau élevé. La disposition des strates, dans ce cas, peut favoriser la croissance des racines de haut en bas. Cette tendance n'est cependant pas trop importante dans la mesure où, comme indiqué précédemment, cette disposition est principalement mise en oeuvre pour des produits de très faible masse volumique. Dans ces conditions, l'influence des strates dans une structure très peu dense est un peu moins sensible sur l'orientation du développement des racines.

## Revendications

1. Substrat de culture hors-sol à base de feutre de fibres minérales, lequel feutre présente une structure résultant d'une ou plusieurs opérations de compression longitudinale effectuée(s) sur le feutre présentant à l'origine une face supérieure et une face inférieure et des strates sensiblement planes et parallèles auxdites faces, **caractérisé en ce que** le feutre présente, dans sa structure interne, des strates au moins partiellement plissées dans l'épaisseur du feutre entre lesdites faces, lesdites faces étant cependant pratiquement exemptes de crevasses.

2. Substrat selon la revendication 1, **caractérisé en ce que** le feutre est disposé dans le substrat de manière que la direction de compression longitudinale reste dans un plan horizontal ou pratiquement horizontal pendant l'utilisation du substrat.

3. Substrat selon l'une des revendications 1 ou 2 dans lequel la structure plissée des strates correspond à au moins 50 % de la section dans l'épaisseur du feutre.

4. Substrat selon l'une des revendications 1 à 3 dans lequel la masse volumique apparente locale, sur une fraction dont les dimensions suivant les trois axes est au moins égale au 1/10 de l'épaisseur du substrat, présente des variations qui peuvent atteindre 50 % de la valeur moyenne globale.

5. Substrat selon l'une des revendications précédentes de masse volumique comprise entre 10 et 60 kg/m³ et, de préférence entre 15 et 50 kg/m³.

6. Substrat selon l'une des revendications précédentes formé à partir d'un feutre présentant des strates d'hydrorétentivité différentes.

7. Substrat selon la revendication 6 obtenu par compression longitudinale d'un feutre constitué de plusieurs couches de fibres de masse volumique et/ou de diamètre moyen distincts.

8. Substrat selon l'une quelconque des revendications précédentes dans lequel les libres ont un diamètre moyen compris entre 1 et 11 micromètres et, de préférence, de 2 à 9 micromètres.

9. Substrat selon l'une des revendications précédentes constitué à partir de feutre de fibres de verre.

10. Substrat selon l'une des revendications précédentes découpé en forme de pain à partir d'une bande de feutre continue et dans lequel les faces inférieure et supérieure correspondent aux faces inférieures et supérieures du feutre dans lequel le pain est découpé, la longueur du pain correspondant étant dans la direction de la largeur du feutre.

11. Substrat selon l'une des revendications 1 à 9 découpé en forme de pain à partir d'une bande de feutre continue, la longueur du pain étant découpée dans la longueur de la bande de feutre, le pain découpé étant tourné de 90° de manière à placer les faces correspondant aux faces supérieure et inférieure du feutre en position verticale.

12. Procédé de production d'un substrat de culture hors-sol à base de fibres minérales qui comprend les étapes suivantes :
• production de libres minérales à partir de matériau fondu et transport de ces fibres jusqu'à un organe de réception par un courant gazeux et enduction d'un liant liquide au cours dudit transport,
• réception des fibres sur l'organe de réception filtrant les gaz, les fibres se déposant majoritairement sous forme de couches dans lesquelles les fibres s'orientent quasi parallèlement à la surface de l'organe de réception,
• compression longitudinale du feutre,
• fixation de la structure du substrat formé par réticulation de la composition de liant au passage dans une étuve,
**caractérisé en ce que** la compression longitudinale est effectuée sur le feutre maintenu au cours de cette opération sur ses deux faces, le taux de compression étant choisi de manière à plisser le feutre dans son épaisseur entre lesdites faces, à l'exception desdites faces restant pratiquement exemptes de crevasses.

13. Procédé selon la revendication 12 dans lequel le taux de compression longitudinale est égal ou supérieur à 2,5.

## Claims

1. Soilless culture substrate based on mineral fibre felt, which felt has a structure resulting from one or more longitudinal compression operations performed on the felt which originally has an upper face and a lower face and layers which are substantially flat and parallel to said faces, characterized in that the internal structure of the felt has layers which are at least partially folded in the thickness of the felt between said faces, said faces, however, being practically crack-free.

2. Substrate according to Claim 1, characterized in that the felt is disposed in the substrate such that the longitudinal compression direction remains in a plane which is horizontal or practically horizontal whilst the substrate is in use.

3. Substrate according to either of Claims 1 and 2 in which the folded structure of the layers corresponds to at least 50% of the cross-section in the thickness of the felt.

4. Substrate according to any one of Claims 1 to 3, in which the local apparent density, over a fraction of which the dimensions along the three axes is at least 1/10 of the substrate thickness, has variations which can attain 50% of the overall average value.

5. Substrate according to any one of the preceding claims having a density of between 10 and 60 kg/m³ and preferably between 15 and 50 kg/m³.

6. Substrate according to any one of the preceding claims formed from a felt having different water-retention layers.

7. Substrate according to Claim 6 obtained by longitudinal compression of a felt consisting of a plurality of layers of fibres having different densities and/or average diameters.

8. Substrate according to any one of the preceding claims in which the fibres have an average diameter of between 1 and 11 µm and preferably of between 2 and 9 µm.

9. Substrate according to any one of the preceding claims formed from glass fibre felt.

10. Substrate according to any one of the preceding claims which is cut out in the form of a cake from a continuous felt strip and on which the lower and upper faces correspond to the lower and upper faces of the felt from which the cake is cut out, the length of the corresponding cake being in the direction of the width of the felt.

11. Substrate according to any one of Claims 1 to 9 cut out in the form of a cake from a continuous felt strip, the length of the cake being cut out in the length of the felt strip, the cut-out cake being rotated through 90° so as to place the faces corresponding to the upper and lower faces of the felt in the vertical position.

12. Process for producing a soilless culture substrate based on mineral fibres comprising the following steps:
• producing mineral fibres from molten material and conveying these fibres to a receiving member by a stream of gas and coating them with a liquid binder during the conveying step;
• receiving the fibres on the receiving member filtering the gases, the fibres being deposited predominantly in the form of layers in which the fibres are directed almost parallel to the surface of the receiving member:
• longitudinal compression of the felt;
• fixing of the structure of the substrate formed by crosslinking the binder composition as it passes through a stove;
characterized in that longitudinal compression is carried out on the felt which is held during this operation on its two faces, the compression rate being selected such that the felt is folded in its thickness between said faces, with the exception of the faces which remain practically crack-free.

13. Process according to Claim 12 in which the longitudinal compression rate is equal to or greater than 2.5.

## Patentansprüche

1. Substrat für eine erdefreie Kultur auf der Basis eines Mineralfaserfilzes, wobei dieser Filz eine Struktur aufweist, die aus einem oder mehreren Längskomprimiervorgängen resultiert, der/die mit dem Filz durchgeführt wird/werden, der ursprünglich eine Ober- und eine Unterseite und Lagen besitzt, die im wesentlichen plan und parallel zu diesen Seiten sind, **dadurch gekennzeichnet, daß** der Filz in seiner inneren Struktur Lagen aufweist, die in der Dicke des Filzes zwischen diesen Seiten wenigstens teilweise gefaltet sind, wobei die Seiten aber praktisch frei von Ausnehmungen sind.

2. Substrat nach Anspruch 1, **dadurch gekennzeichnet, daß** der Filz im Substrat derart angeordnet ist, daß die Richtung der Längskomprimierung während der Verwendung des Substrats in einer horizontalen bzw. praktisch horizontalen Ebene bleibt.

3. Substrat nach Anspruch 1 oder 2, in welchem die gefaltete Struktur der Lagen mindestens 50 % des Schnitts durch die Dickes des Filzes entspricht.

4. Substrat nach einem der Ansprüche 1 bis 3, in welchem die lokale Rohdichte über eine Fraktion, deren Abmessungen in den drei Achsen mindestens 1/10 der Substratdicke betragen, Schwankungen aufweist, die 50 % des Gesamtmittelwertes erreichen können.

5. Substrat nach einem der vorhergehenden Ansprüche, dessen Rohdichte 10 bis 60 kg/m³ und vorzugsweise 15 bis 50 kg/m³ beträgt.

6. Substrat nach einem der vorhergehenden Ansprüche, das aus einem Filz gebildet ist, der Lagen mit unterschiedlichem Wasserrückhaltevermögen besitzt.

7. Substrat nach Anspruch 6, welches durch Längskomprimierung eines Filzes erhalten ist, der ans mehreren Faserschichten mit unterschiedlicher Rohdichte und/oder unterschiedlichem mittlerem Durchmesser besteht.

8. Substrat nach einem der vorhergehenden Ansprüche, in welchem der mittlere Durchmesser der Fasern 1 bis 11 Mikrometer und vorzugsweise 2 bis 9 Mikrometer beträgt.

9. Substrat nach einem der vorhergehenden Ansprüche, das von Glasfaserfilz gebildet worden ist.

10. Substrat nach einem der vorhergehenden Ansprüche, das aus einem endlosen Filzband brotförmig zugeschnitten ist und in welchem die Unter- und die Oberseite der Unter- und der Oberseite des Filzes entsprechen, aus welchem der brotförmige Block herausgeschnitten worden ist, wobei sich die Länge des entsprechenden Blockes in der Richtung der Filzbreite befindet.

11. Substrat nach einem der Ansprüche 1 bis 9, das aus einem endlosen Filzband brotförmig zugeschnitten ist, wobei die Länge des brotförmigen Blockes aus der Länge des Filzbandes herausgeschnitten und der herausgeschnittene Block derart um 90° gedreht worden ist, daß die der Ober- und der Unterseite des Filzes entsprechenden Seiten in vertikaler Position angeordnet werden.

12. Verfahren zur Herstellung eines Substrats für eine erdefreie Kultur auf der Basis von Mineralfasern, das folgende Stufen.
• Herstellung von Mineralfasern aus geschmolzenem Material und Transport dieser Fasern durch einen Gasstrom bis zu einer Aufnahmeeinrichtung, wobei während des Transports ein flüssiges Bindemittel aufgetragen wird,
• Sammeln der Fasern auf der das Gas filternden Aufnahmevorrichtung, wobei sich die Fasern überwiegend in Form von Schichten abscheiden, in denen sich die Fasern praktisch parallel zur Oberfläche der Aufnahmeeinrichtung ausrichten,
• Längskomprimierung des Filzes und
• Fixierung der Substratstruktur, die durch Vernetzung der Bindemittelzusammensetzung beim Durchlauf durch einen Ofen gebildet worden ist, umfaßt,
**dadurch gekennzeichnet**, daß die Längskomprimierung auf den Filz ausgeübt wird, der während dieses Vorganges auf seinen beiden Seiten festgehalten wird, wobei man den Komprimierungsgrad derart wählt, daß der Filz in der Dicke zwischen diesen Seiten gefaltet wird, unter der Bedingung, daß die Seiten praktisch frei von Tiefen bleiben.

13. Verfahren nach Anspruch 12, in welchem der Längskomprimierungsgrad gleich oder größer als 2,5 ist.
